# EUROPEAN PATENT SPECIFICATION

(11) **EP 2 768 045 B1**
(45) Date of publication and mention of the grant of the patent: **14.10.2015**
(21) Application number: 14155210.9
(22) Date of filing: 14.02.2014
(51) Int. Cl.: H01M 2/10

(54) **Battery pack for vehicle**
Batteriepack für Fahrzeug
Batterie pour vehicule

(30) Priority: 15.02.2013 JP 2013028316
(43) Date of publication of application: 20.08.2014
(73) Proprietor: Mitsubishi Jidosha Kogyo Kabushiki Kaisha, Tokyo 108-8410 (JP)
(72) Inventor: NAGANO, Teruyoshi, Tokyo, 108-8410 (JP); HORII, Naoyuki, Tokyo, 108-8410 (JP); MORITA, Hiroyuki, Tokyo, 108-8410 (JP); TAKEMURA, Bunpei, Tokyo, 108-8410 (JP); KANO, Hiroaki, Tokyo, 108-8410 (JP); SUZUKI, Katsuhiro, Tokyo, 108-8410 (JP)
(74) Representative: Vossius & Partner Patentanwälte Rechtsanwälte mbB

(56) References cited:
- EP-A1- 1 850 407
- EP-A1- 2 505 459
- US-A1- 2009 186 266
- US-A1- 2010 112 424

## Description

### [Technical Field]

This invention relates to a battery pack for a vehicle, the battery pack comprising a battery module housed in a case.

### [Background Art]

To cut down on emission gases discharged to the environment, various electric vehicles are developed. Since the electric vehicle obtains power by driving a motor, it is loaded with battery cells which serve as a power supply. With the electric vehicle, a number of the battery cells need to be loaded in a limited space. Thus, a plurality of the battery cells are stacked to form a battery module, and many of the battery modules are accommodated in a battery case under the floor or the like.

In housing the battery modules in the battery case, it has been proposed to fix the battery modules to the battery case via flanges (brackets). One of the proposals is a technology which comprises providing flanges to a battery cover, as the battery case, and the battery modules, and securing the flanges to each other, thereby fixing the battery cover and the battery modules together (Patent Document 1, for example).

By applying the technology of Patent Document 1, the battery modules can be fixed to a tray-shaped case, even when the tray-shaped case is used as the battery case. That is, the brackets are interposed between the case and the battery modules, and the brackets are fixed to the case and the battery modules, whereby the battery modules can be fixed to the case.

By fixing the battery case and the battery modules via the brackets, it is rendered unnecessary to form a frame or the like for fitting the battery modules into the battery case to fix them, thus reducing restrictions on the shape of the battery case. Hence, the degree of freedom of placement of the battery case is improved, and it becomes easy to load the battery case on various vehicles.

When the battery modules are fixed to the battery case via the brackets, the battery modules may move relative to the battery case, depending on the status of the vehicle. Upon relative movement of the battery modules, the brackets are likely to interfere with the batterymodules or the like. Thus, it is desired that influences by the brackets be minimized.

### [Prior Art Documents]

### [Patent Documents]

[Patent Document 1]
Japanese Patent No. 3,896,607

### [Summary of the Invention]

The present invention has been accomplished in the light of the above-mentioned circumstances. It is an object of this invention to provide a battery pack for a vehicle, having a structure in which a battery module is fixed to a battery case via a bracket, and being capable of keeping the influence of interference by the bracket with the battery module to a minimum, even if the battery module relatively moves.

### [Problems to be solved by the invention]

A first aspect of the present invention is a battery pack for a vehicle, including: a battery module composed of a plurality of battery cells; and a battery case having a tray for placing the battery module on an upper surface thereof, and a cover for covering the battery module,
wherein the battery pack comprises
a bracket having a first surface extending along a wall surface of the battery module being fixed to the battery module, and a second surface extending along a surface of the tray being fixed to the tray, and
a stiffening plate material which is disposed between the battery module and a region of the bracket including a boundary site between the first surface and the second surface, and which has a surface portion extending along the wall surface of the battery module.

According to the first aspect of the present invention, there is the stiffening plate material having the surface portion extending along the wall surface of the battery module. Thus, even if the battery module relatively moves to bring the boundary site between the first surface and the second surface of the bracket into contact with the wall surface of the battery module, the area of contact with the wall surface of the battery module is ensured by the stiffening plate material.

Thus, even if the battery module relatively moves in the structure in which the battery module is fixed to the battery case via the bracket, the influence of interference by the bracket with the battery module can be minimized.

A second aspect of the present invention is the battery pack for a vehicle according to the first aspect, wherein the bracket has the first surface formed to be continuous with the second surface, and has a bend, as the boundary site, formed by the first surface and the second surface, and the stiffening plate material is disposed between the region of the bracket including the bend and the battery module.

According to the second aspect of the present invention, even if the bend of the bracket contacts the wall surface of the battery module, the area of contact with the wall surface of the battery module is ensured by the stiffening plate material.

A third aspect of the present invention is the battery pack for a vehicle according to the second aspect, wherein the surface portion of the stiffening plate material is disposed below the bend of the bracket.

According to the third aspect of the present invention, the stiffening plate material is disposed below the bend of the bracket. Thus, the contact of the bracket with the wall surface of the battery module placed on the tray-shaped case canbe reliablymade as surface contact.

A fourth aspect of the present invention is the battery pack for a vehicle according to any one of the first to third aspects, wherein the stiffening plate material is fixed to the first surface of the bracket.

According to the fourth aspect of the present invention, the stiffening plate material is fixed to the first surface of the bracket. Thus, the area of contact of the bracket with the wall surface of the battery module can be reliably ensured, regardless of the deformation direction of the bracket.

A fifth aspect of the present invention is the battery pack for a vehicle according to any one of the first to third aspects, wherein the stiffening plate material is fixed to the wall surface of the battery module.

According to the fifth aspect of the present invention, the stiffeningplatematerial is fixed to the wall surface of the battery module. Thus, the influence of interference by the bracket with the desired position of the battery module can be suppressed.

A sixth aspect of the present invention is the battery pack for a vehicle according to any one of the first to third aspects, wherein the stiffening plate material is composed of a bracket stiffening plate material fixed to the first surface of the bracket, and a module stiffening plate material fixed to the wall surface of the battery module.

According to the sixth aspect of the present invention, the stiffening plate material is composed of the module stiffening plate material and the bracket stiffening plate material. Thus, the total plate thickness of the stiffening plate material can be ensured sufficiently. Consequently, the stiffening plate material can be thickened, without deterioration of the mountability of the module stiffening plate material or the bracket stiffening plate material.

A seventh aspect of the present invention is the battery pack for a vehicle according to the sixth aspect, wherein a concavity is formed in the wall surface of the battery module, and the module stiffening plate material is fixed to the concavity in the wall surface of the batterymodule such that a surface of the wall surface opposing the bracket is formed in a flush state.

According to the seventh aspect of the present invention, the module stiffening plate material is fixed to the concavity in the wall surface such that the wall surface as a surface opposing the bracket is in a flush state. Thus, even when the concavity is formed in the wall surface (even when a stepped part is present), the area of contact is kept ensured by the stiffeningplate material.

### [Effects of the Invention]

With the battery pack for a vehicle according to the present invention, even if the battery module is relatively moved in the structure having the battery module fixed to the battery case via the bracket, the influence of interference by the bracket with the battery module can be kept to a minimum.

### [Brief Description of the Drawings]

[Fig. 1] is an appearance drawing of an electric vehicle equipped with a batterypack for a vehicle according to an embodiment of the present invention.
[Fig. 2] is an exploded perspective view of the battery pack for a vehicle according to the embodiment of the present invention.
[Fig. 3] is an appearance drawing of essential parts of a site where a bracket is mount in the battery pack.
[Fig. 4] is a sectional view of the parts in Fig. 3.
[Fig. 5] is a sectional view of the parts in which the bracket has been deformed.
[Fig. 6] is a sectional view of another embodiment.
[Fig. 7] is a sectional view of still another embodiment.

### [Mode for Carrying Out the Invention]

According to the disclosed technology, a stiffening plate material 7 has a surface portion extending along the wall surface of a battery module 4 which is fixed to a module surface 11 of a bracket 5. Even if the battery module 4 moves to deform the bracket 5, a bend 6 does not directly contact the wall surface, but the stiffening plate material 7 interferes with the wall surface of the battery module 4. Thus, the area of contact with the wall surface of the battery module 4 is ensured by the stiffening plate material 7.

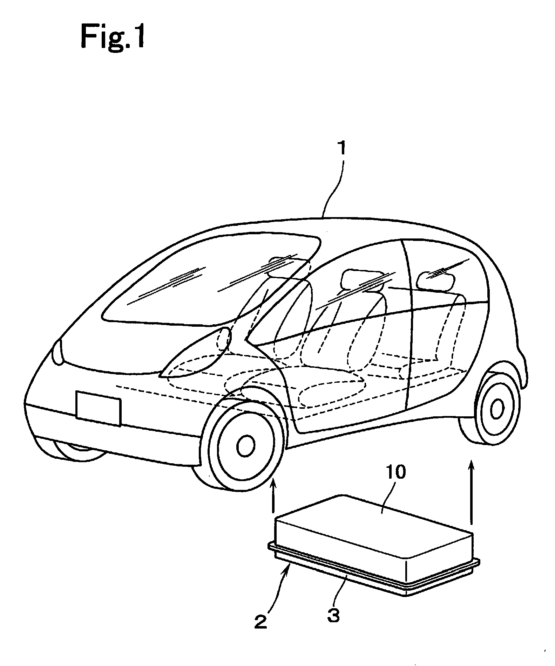

A battery pack for a vehicle according to an embodiment of the present invention will be described with reference to Figs. 1 to 5.

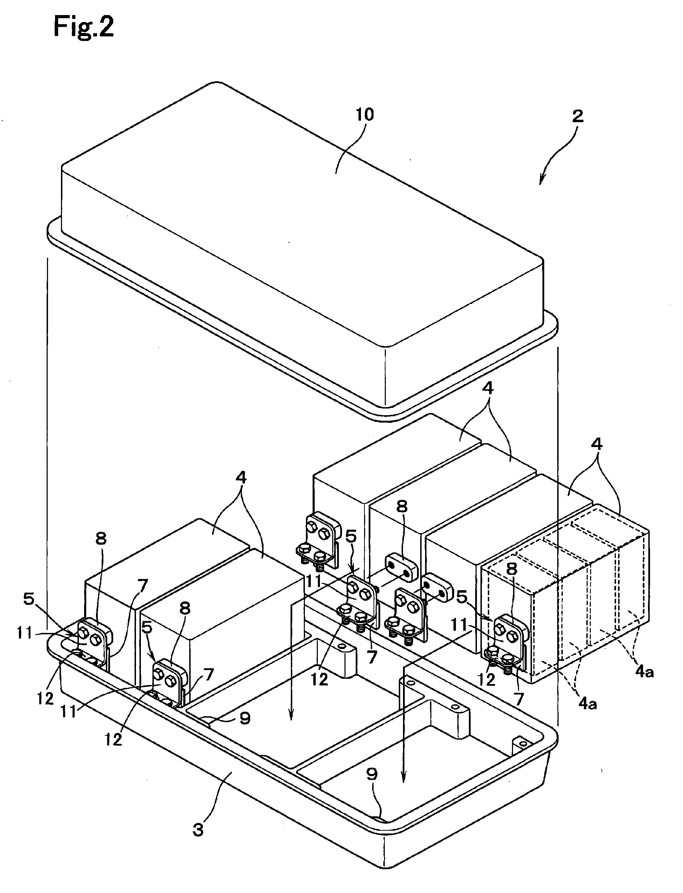

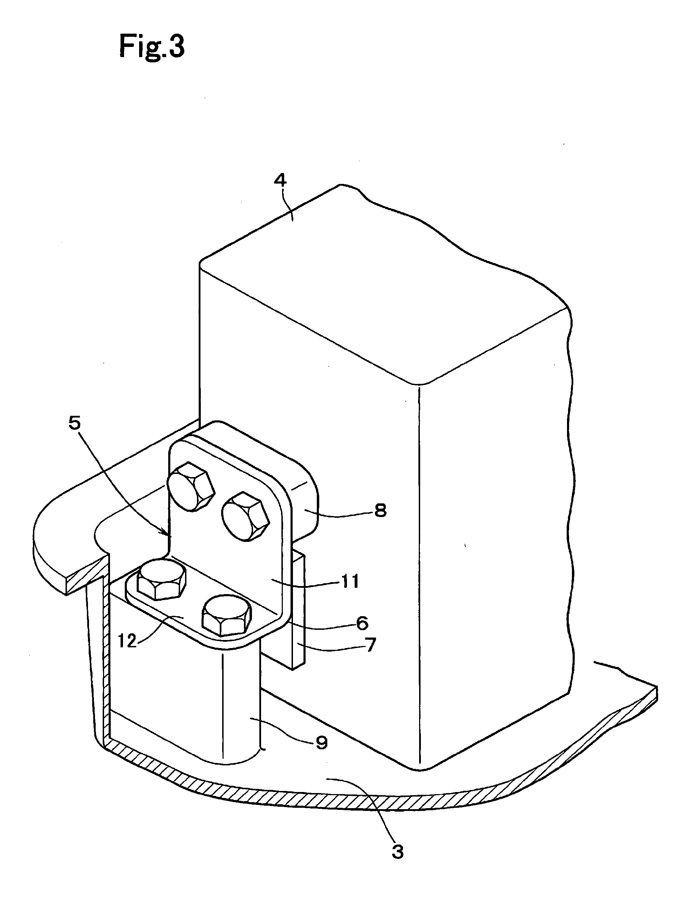

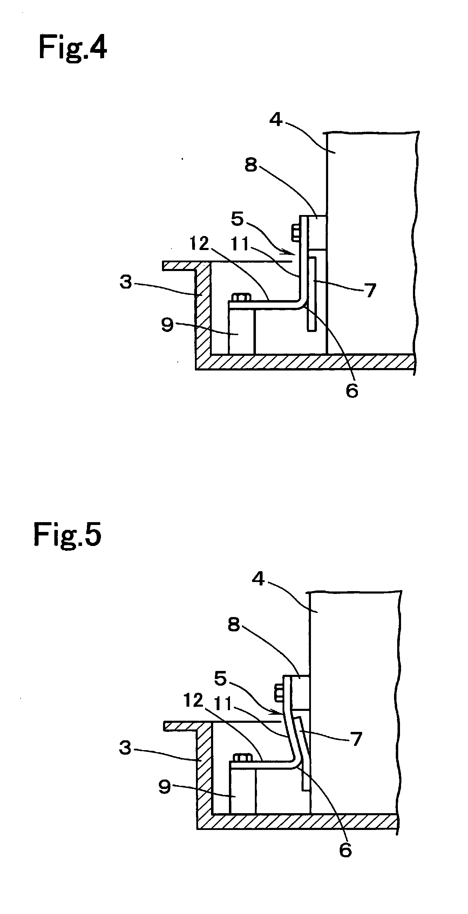

Fig. 1 shows the appearance, in an exploded perspective manner, of an electric vehicle equipped with a battery pack for a vehicle according to an embodiment of the present invention. Fig. 2 shows an exploded perspective view of the battery pack for a vehicle. Fig. 3 shows the appearance of essential parts illustrating a site where a bracket is mounted. Fig. 4 shows a section of the site where the bracket is mounted. Fig. 5 shows a section of the above site where the bracket has been deformed upon movement of a battery module.

As shown in Fig. 1, a frame (not shown) of an electric vehicle 1 is mounted with a battery pack 2 for a vehicle (simply called a battery pack). The battery pack 2 comprises a tray 3 and a cover 10 constituting a battery case. A plurality of battery modules are fixed in the tray 3, and the battery modules are covered with the cover 10.

As shown in Fig. 2, the tray 3 bears the plurality of battery modules 4 fixed thereto via brackets 5. Each of the battery modules 4 is composed of a plurality of battery cells 4a. The plurality of battery cells 4a are connected together to form a high voltage circuit acting as a power supply for a traveling drive or the like.

As shown in Fig. 2 to Fig. 4, the brackets 5 each prepared from a metal sheet are provided between the front side of the tray 3 in the vehicle and the plurality of battery modules 4. The brackets 5 are fixed to the tray 3 and the battery modules 4, whereby the battery modules 4 are fixed to the tray 3. Each of the brackets 5 is an L-shaped bracket 5, and a stiffening plate material 7 prepared from a metal sheet is fixed by welding to a site of the bracket 5 including a bend 6.

The L-shaped bracket 5 is composed of a module surface (first surface) 11, for example, a vertical surface, which extends along the wall surface of the battery module 4, and a tray surface (second surface) 12, for example, a horizontal surface, which is formed to be downwardly continuous with the module surface 11. The boundary site between the module surface 11 and the tray surface 12 becomes the bend 6 to form the L-shaped bracket 5.

The module surface 11 of the L-shaped bracket 5 is fixed via screw members to a boss portion 8 formed on the wall surface of the battery module 4, while the tray surface 12 of the bracket 5 is fixed via screw members to a boss portion 9 formed on the bottom surface of the tray 3. As a result, the battery module 4 is fixed to the tray 3 via the bracket 5.

The stiffening plate material 7 is disposed between the region of the L-shaped bracket 5, including the bend 6, and the battery module 4, and is fixed to the module surface 11 of the bracket 5 by welding. Moreover, the stiffeningplate material 7 is disposed below (while extending below) the bend 6 of the L-shaped bracket 5. The stiffening plate material 7 is prepared from a metal sheet of a harder metal than the metal of the bracket 5. The bend 6 may be a sharp-cornered portion or a curved portion.

The battery module 4 is a heavy object and is composed of a highly rigid member, including the tray 3, in consideration of vibrations, impact, etc. Therefore, when a great impact is applied, such as in a collision, the possibility of the battery module 4 moving forward relative to the tray 3 is not deniable.

A situation in which the battery module 4 has relatively moved forward will be explained based on Fig. 5.

As shown in the drawing, when the heavy, highly rigid battery module 4 relatively moves forward (leftward in the drawing), the L-shaped bracket 5 deforms, whereupon the bend 6 interferes with the wall surface of the battery module 4. Since the stiffening plate material 7 having a surface portion extending along the wall surface of the battery module 4 is fixed to the module surface 11 of the bracket 5, the bend 6 does not directly contact the wall surface, but instead, the stiffening plate material 7 interferes with the wall surface of the battery module 4.

Because of the above features, the area of contact with the wall surface of the battery module 4 is ensured by the stiffening plate material 7. Hence, even if the battery module 4 relatively moves forward in the structure in which the battery module 4 is fixed to the tray 3, which is the battery case, via the bracket 5 having the bend 6, the influence of interference by the bend 6 of the bracket 5 with the wall surface of the battery module 4 can be kept to a minimum.

Furthermore, the stiffening plate material 7 is disposed below the bend 6 of the L-shaped bracket 5, and fixed to the bracket 5. Thus, the area of contact of the bend 6 of the L-shaped bracket 5 with the wall surface of the battery module 4 placed on the tray 3 can be reliably ensured.

Besides, the stiffeningplate material 7 is fixed to the module surface 11 of the bracket 5. Thus, the area of contact of the bend 6 of the L-shapedbracket 5 with the wall surface of the battery module 4 can be reliably ensured, regardless of the direction of deformation of the bracket 7.

The above-mentioned battery pack 2 can minimize the influence of interference by the bend 6 of the bracket 5 with the wall surface of the battery module 4. Thus, even if the battery module 4 relatively moves, the risk of damage to the wall surface of the battery module 4 or to the batter cell 4a can be dramatically lessened.

Moreover, the stiffening plate material 7 is prepared from a metal sheet of a harder metal than the metal of the bracket 5. Thus, the suppression of interference by the bracket 5 with the wall surface of the battery module 4 can be achieved more effectively.

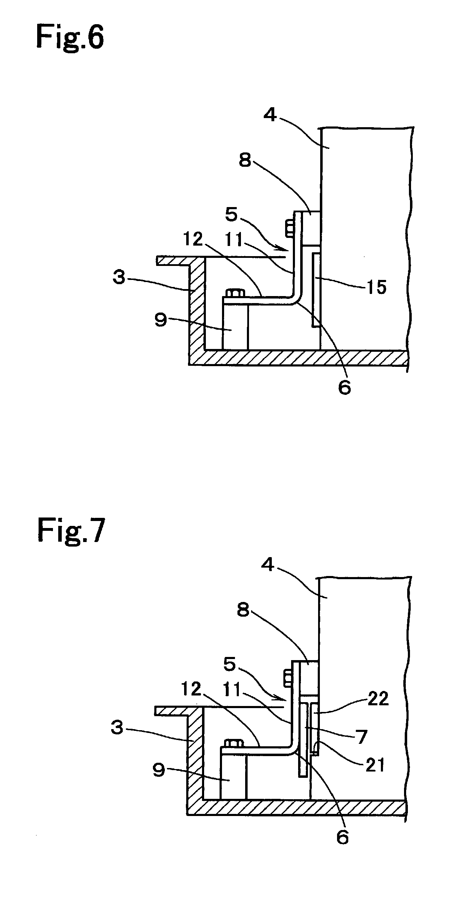

Other embodiments will be described based on Figs. 6 and 7.

Figs. 6 and 7 show sections of the site where the bracket is mounted in battery packs according to other embodiments. The same members as the members shown in Fig. 4 will be assigned the same numerals as those in Fig. 4, and duplicate explanations will be omitted.

The embodiment shown in Fig. 6 is of a structure in which a stiffening plate material 15 (module stiffening plate material) is fixed by welding to the wall surface of a battery module 4 corresponding to a bend 6 of a bracket 5. Since the stiffening plate material 15 is fixed to the wall surface of the battery module 4, the influence of interference by the bracket 5 with the desired position of the battery module 4 can be suppressed.

Additionally, a stiffening plate material 7 (bracket stiffening plate material) can be fixed to a module surface 11 of the bracket 5, and the stiffening plate material 15 can be fixed to the wall surface of the battery module 4.

In this case, a plate thickness necessary for the stiffening plate material can be shared between the stiffening plate material 7 and the stiffeningplatematerial 15, so that the plate thicknesses of the stiffening plate materials 7 and 15 can be decreased to enhance mounting performance by welding. On the other hand, the total plate thickness of the stiffening plate material can be increased to maintain the state of surface contact.

The embodiment shown in Fig. 7 is an example of a battery pack in which a stepped portion 21 as a concavity is formed in the wall surface of a battery module 4.

As shown in the drawing, the stepped portion 21 is formed in the wall surface of the battery module 4, and a module stiffening plate material 22 is fixed by welding to the concavity side of the stepped portion 21. On the other hand, a stiffening plate material 7 is fixed to a module surface 11 of a bracket 5. Since the module stiffening plate material 22 is fixed to the concavity side of the stepped portion 21, the wall surface (and its surroundings) of the battery module 4 opposing a bend 6 of the bracket 5 is formed in a flush state.

Thus, even when the concavity is formed (even when the stepped portion 21 is present) in the wall surface of the battery module 4, the bend 6 of the bracket 5 (the stiffening plate material 7) contacts the flush wall surface, with the result that the state of the area of contact being ensured by the stiffeningplate material 7 is maintained.

### [Explanations of Letters or Numerals]

- 1: Electric vehicle
- 2: Battery pack for vehicle (battery pack)
- 3: Tray
- 4: Battery module
- 5: Bracket
- 6: Bend
- 7, 15: Stiffening plate material
- 8, 9: Boss portion
- 10: Cover
- 11: Module surface (first surface)
- 12: Tray surface (second surface)
- 21: Stepped portion
- 22: Module stiffening plate material

## Claims

1. A battery pack for a vehicle, including: a battery module (4) composed of a plurality of battery cells (4a); and a battery case having a tray (3) for placing the battery module on an upper surface thereof, and a cover (10) for covering the battery module,
wherein the battery pack comprises
a bracket (5) having a first surface (11) extending down along a wall surface of the battery module and being fixed to the battery module, and a second surface (12) extending along a surface of the tray and being fixed to the tray, and
a stiffening plate material (7) which is disposed between the wall surface of the battery module and the first surface of the bracket and including a boundary site between the first surface and the second surface, and the stiffening surface has a surface portion extending along the wall surface of the battery module below the boundary site.

2. The battery pack for a vehicle according to claim 1, wherein
the bracket has the first surface formed to be continuous with the second surface, and has a bend (6), as the boundary site, formed by the first surface and the second surface, and
the stiffening plate material is disposed between the region of the bracket including the bend and the battery module.

3. The battery pack for a vehicle according to claim 2, wherein
the surface portion of the stiffening plate material is disposed below the bend of the bracket.

4. The battery pack for a vehicle according to any one of claims 1 to 3, wherein
the stiffening plate material is fixed to the first surface of the bracket.

5. The battery pack for a vehicle according to any one of claims 1 to 3, wherein
the stiffening plate material is fixed to the wall surface of the battery module.

6. The battery pack for a vehicle according to any one of claims 1 to 3, wherein
the stiffening plate material is composed of a bracket stiffeningplatematerial fixed to the first surface of the bracket, and a module stiffening plate material fixed to the wall surface of the battery module.

7. The battery pack for a vehicle according to claim 6, wherein
a concavity is formed in the wall surface of the batterymodule, and
the module stiffening plate material is fixed to the concavity in the wall surface of the battery module such that a surface of the wall surface opposing the bracket is formed in a flush state.

## Patentansprüche

1. Batteriepack für ein Fahrzeug, der aufweist: ein Batteriemodul (4), das aus einer Vielzahl von Batteriezellen (4a) zusammengesetzt ist; und ein Batteriegehäuse mit einem Träger (3) zum Anordnen des Batteriemoduls auf einer Oberseite davon, und einen Deckel (10) zum Abdecken des Batteriemoduls, wobei der Batteriepack aufweist:
eine Winkelstütze (5), die eine erste Oberfläche (11), die sich nach unten längs einer Wandoberfläche des Batteriemoduls erstreckt und am Batteriemodul befestigt ist, und eine zweite Oberfläche (12) aufweist, die sich längs einer Oberfläche des Trägers erstreckt und am Träger befestigt ist, und
ein Versteifungsplattenmaterial (7), das zwischen der Wandoberfläche des Batteriemoduls und der ersten Oberfläche der Winkelstütze angeordnet ist und eine Begrenzungsstelle zwischen der ersten Oberfläche und der zweiten Oberfläche aufweist, und die Versteifungsoberfläche einen Oberflächenabschnitt aufweist, der sich längs der Wandoberfläche des Batteriemoduls unter der Begrenzungsstelle erstreckt.

2. Batteriepack für ein Fahrzeug nach Anspruch 1, wobei
die erste Oberfläche der Winkelstütze so ausgebildet ist, dass sie mit der zweiten Oberfläche stetig ist, und eine Biegung (6) als die Begrenzungsstelle aufweist, die durch die erste Oberfläche und die zweite Oberfläche gebildet wird, und
das Versteifungsplattenmaterial zwischen dem Bereich der Winkelstütze, der die Biegung aufweist, und dem Batteriemodul angeordnet ist.

3. Batteriepack für ein Fahrzeug nach Anspruch 2, wobei der Oberflächenabschnitt des Versteifungsplattenmaterials unter der Biegung der Winkelstütze angeordnet ist.

4. Batteriepack für ein Fahrzeug nach einem der Ansprüche 1 bis 3, wobei das Versteifungsplattenmaterial an der ersten Oberfläche der Winkelstütze befestigt ist.

5. Batteriepack für ein Fahrzeug nach einem der Ansprüche 1 bis 3, wobei das Versteifungsplattenmaterial an der Wandoberfläche des Batteriemoduls befestigt ist.

6. Batteriepack für ein Fahrzeug nach einem der Ansprüche 1 bis 3, wobei
das Versteifungsplattenmaterial aus einem Winkelstützen-Versteifungsplattenmaterial, das an der ersten Oberfläche der Winkelstütze befestigt ist, und einem Modul-Versteifungsplattenmaterial zusammengesetzt ist, das an der Wandoberfläche des Batteriemoduls befestigt ist.

7. Batteriepack für ein Fahrzeug nach Anspruch 6, wobei
eine Innenwölbung in der Wandoberfläche des Batteriemoduls ausgebildet ist, und
das Modul-Versteifungsplattenmaterial an der Innenwölbung in der Wandoberfläche des Batteriemoduls so befestigt ist, dass eine Oberfläche der Wandoberfläche, die der Winkelstütze gegenüberliegt, in einem bündigen Zustand ausgebildet ist.

## Revendications

1. Bloc-batterie pour un véhicule, comprenant : un module de batterie (4) constitué d'une pluralité de cellules de batterie (4a) ; et un boîtier de batterie pourvu d'un bac (3) pour mettre en place le module de batterie sur sa surface supérieure, et d'un couvercle (10) pour recouvrir le module de batterie,
où le bloc-batterie comporte
un équerre (5) présentant une première surface (11) s'étendant verticalement le long d'une surface de paroi du module de batterie et fixée au module de batterie, et une deuxième surface (12) s'étendant le long d'une surface du bac et fixée au bac, et
un matériau de plaque de renforcement (7) disposé entre la surface de paroi du module de batterie et la première surface de l'équerre, et présentant une partie limite entre la première surface et la deuxième surface, et la surface de renforcement présentant une fraction de surface s'étendant le long de la surface de paroi du module de batterie en dessous de la partie limite.

2. Bloc-batterie pour un véhicule selon la revendication 1, où la première surface de l'équerre est formée de manière à être continue avec la deuxième surface, et présente un coude (6) en tant que partie limite, formé par la première surface et la deuxième surface, et où
le matériau de plaque de renforcement est disposé entre la partie de l'équerre qui comprend le coude et le module de batterie.

3. Bloc-batterie pour un véhicule selon la revendication 2, où la fraction de surface du matériau de plaque de renforcement est située en dessous du coude de l'équerre.

4. Bloc-batterie pour un véhicule selon l'une des revendications 1 à 3, où le matériau de plaque de renforcement est fixé contre la première surface de l'équerre.

5. Bloc-batterie pour un véhicule selon l'une des revendications 1 à 3, où le matériau de plaque de renforcement est fixé contre la surface de paroi du module de batterie.

6. Bloc-batterie pour un véhicule selon l'une des revendications 1 à 3, où le matériau de plaque de renforcement est constitué d'un matériau de plaque de renforcement d'équerre fixé contre la première surface de l'équerre, et d'un matériau de plaque de renforcement de module fixé contre la surface de paroi du module de batterie.

7. Bloc-batterie pour un véhicule selon la revendication 6, où une concavité est formée sur la surface de paroi du module de batterie,
et où
le matériau de plaque de renforcement de module est fixé contre la concavité à la surface de paroi du module de batterie, de manière à rendre affleurante une surface de la surface de paroi opposée à l'équerre.
